Europäisches Patentamt

European Patent Office

Office européen des brevets

(11) Veröffentlichungsnummer: **0 530 597 A2**

## EUROPÄISCHE PATENTANMELDUNG

(21) Anmeldenummer: **92114189.1**

(22) Anmeldetag: **20.08.92**

(51) Int. Cl.5: **F16H 37/08**

(30) Priorität: **03.09.91 DE 9110908 U**

(43) Veröffentlichungstag der Anmeldung:
**10.03.93 Patentblatt 93/10**

(84) Benannte Vertragsstaaten:
**AT BE CH DE DK ES FR GB IT LI NL SE**

(71) Anmelder: **Polnik, Artur**
**Oberrahser Strasse 133**
**W-4060 Viersen 1(DE)**

(72) Erfinder: **Polnik, Artur**
**Oberrahser Strasse 133**
**W-4060 Viersen 1(DE)**

(74) Vertreter: **Bonsmann, Manfred, Dipl.-Ing.**
**Kaldenkirchener Strasse 35a**
**W-4050 Mönchengladbach 1 (DE)**

(54) **Getriebe.**

(57) Bei einem Getriebe mit einem Eingangsdrehkörper, einem Ausgangsdrehkörper und einem Gehäuse ist vorgesehen, daß in dem Getriebe wenigstens ein die Drehbewegung zwischen dem Eingangsdrehkörper und dem Ausgangsdrehkörper übertragender Rollkörper vorgesehen ist, der zwischen wenigstens zwei im wesentlichen kreisrunden und einen sich in Umfangsrichtung verjüngenden Spalt bildenden Laufbahnen abrollbar angeordnet ist. Der Rollkörper ist mit einem Antriebsrollradius mit der einen Laufbahn und mit einem Abtriebsrollradius mit der anderen Laufbahn in den sich verjüngenden Spalt durch eine Zwangseinrichtung in Kontakt gehalten. Bei dem Getriebe wird zur Übertragung der Leistung nicht die Umfangskraft benutzt, sondern die Antriebskraft des Getriebes drückt den Rollkörper in den sich verjüngenden Spalt, wodurch eine Kraft auf die Exzentrizität ausgeübt wird, die als Abtriebskraft genutzt wird. Das Getriebe weist einen höheren Wirkungsgrad als herkömmliche mechanische Getriebe auf und kann sowohl als starres Getriebe als auch als Verstellgetriebe ausgebildet sein.

Fig.1

Rank Xerox (UK) Business Services
(3.10/3.5x/3.0.1)

Die Erfindung betrifft ein Getriebe mit einem Eingangsdrehkörper, einem Ausgangsdrehkörper und einem Gehäuse.

Es sind Getriebe unterschiedlicher Bauart bekannt. Bei Zahnradgetrieben kann infolge der zwischen den Zähnen auftretenden Reibung der Wirkungsgrad nicht beliebig erhöht werden. Bei Reibradgetrieben herkömmlicher Bauart sind hohe Anpresskräfte erforderlich.

Der Erfindung liegt die Aufgabe zugrunde, ein mechanisches Getriebe der eingangs genannten Art zu schaffen, welches einen höheren Wirkungsgrad als herkömmliche mechanische Getriebe aufweist.

Zur Lösung dieser Aufgabe ist erfindungsgemäß vorgesehen, daß in dem Getriebe wenigstens ein die Drehbewegung zwischen dem Eingangsdrehkörper und dem Ausgangsdrehkörper übertragender Rollkörper vorgesehen ist, der zwischen wenigstens zwei im wesentlichen kreisrunden und einen sich in Umfangsrichtung verjüngenden Spalt bildenden Laufbahnen rollbar angeordnet ist, und der Rollkörper mit einem äußeren Abrollradius mit der äußeren Laufbahn und einem inneren Abrollradius mit der inneren Laufbahn in dem sich verjüngenden Spalt durch eine Zwangseinrichtung in Kontakt gehalten ist.

Ein derartiges mechanisches Getriebe unterscheidet sich von einem herkömmlichen Reibradgetriebe dadurch, daß zur Übertragung der Leistung nicht die Umfangskraft benutzt wird, sondern die Antriebskraft des Getriebes wird lediglich dazu benutzt, den Rollkörper in den sich verjüngenden Spalt hineinzudrücken, wodurch eine Kraft auf die Exzentrizität ausgeübt wird, die als Abtriebskraft genutzt wird. Die innere und die äußere Laufbahn haben nämlich infolge des sich verjüngenden Spaltes keinen gemeinsamen Mittelpunkt. Der Rollkörper wird bei Betrieb nicht gebremst, sondern nur gedreht und kann praktisch unbelastet abrollen, so daß die Abrollbewegung des Rollkörpers in etwa der verlustarmen Abrollbewegung eines Wälzkörpers eines Wälzlagers vergleichbar ist.

Das erfindungsgemäße Getriebe kann grundsätzlich als starres Getriebe ausgeführt werden. In weiterer Ausbildung der Erfindung kann aber auch vorgesehen sein, daß der Abstand zwischen den Kontaktstellen des Rollkörpers mit der äußeren Laufbahn und der inneren Laufbahn über eine Verstelleinrichtung verstellbar ausgebildet ist. Auf diese Weise kann das Getriebe als Verstellgetriebe ausgeführt werden. Hierbei besteht dann noch die Möglichkeit, das Getriebe entweder in Stufen oder stufenlos verstellbar auszubilden. Bei einem stufenlos verstellbaren Getriebe kann beispielsweise der Rollkörper als Kugel, als Tonne, als Kegelkörper mit beispielsweise Doppelkegeln od. dgl. ausgebildet sein.

In weiterer Ausgestaltung der Erfindung kann vorgesehen sein, daß wenigstens einer der Laufbahnen ein Hilfsgetriebe vor- bzw. nachgeschaltet ist. Mit einem derartigen Hilfsgetriebe kann das Übersetzungsverhältnis aufgeweitet werden. Das Hilfsgetriebe kann beispielsweise als Planetengetriebe, als Stirnradgetriebe, als Kegelradgetriebe od. dgl. ausgebildet sein. Ein Vorteil des Hilfsgetriebes besteht u.a. darin, daß die Belastung des Rollkörpers reduziert wird, und zwar um ein erhebliches Maß. Dies hat dann den Vorteil, daß das Getriebe auch zur Übertragung größerer Leistungen bzw. größerer Kräfte eingesetzt werden kann. Bei entsprechender Ausgestaltung des Hilfsgetriebes kann auch erreicht werden, daß die am Abtrieb auftretenden Verluste kleiner sind als die am Rollkörper auftretenden Walkarbeitsverluste. Somit wird der durch den Schlupf des Rollkörpers grundsätzlich auftretende Drehzahlverlust durch Wirkung des Hilfsgetriebes wenigstens teilweise kompensiert. In weiterer Ausgestaltung der Erfindung kann vorgesehen sein, daß die Zwangseinrichtung als mechanische Andrückeinrichtung ausgebildet ist. Die mechanische Andrückeinrichtung kann beispielsweise pneumatisch, hydraulisch, elektrisch oder magnetisch wirkend ausgebildet sein.

Wenn - ausgehend von der größten Spaltweite - nur in Richtung einer Spaltweitenverringerung Rollkörper vorgesehen sind, und zwar in Exzenterdrehrichtung, so verhält sich das Getriebe bei Wegnahme der Antriebsdrehzahl wie ein Freilauf. Ein derartiges Getriebe eignet sich daher besonders vorteilhaft beispielsweise als Fahrradgetriebe.

Sind andererseits - ausgehend von der größten Spaltweite - zu beiden Seiten hin Rollkörper vorgesehen, so tritt ein Zwangslauf auf, d.h., der Abtrieb folgt dem Antrieb.

Je nach Ausbildung des Hilfsgetriebes kann insbesondere bei Einsatz eines Planetengetriebes erreicht werden, daß das Getriebe unter Belastung von einem schnelleren in einen langsameren Gang geschaltet werden kann oder auch umgekehrt von einem langsameren Gang in einen schnelleren Gang. Die erstgenannte Möglichkeit ist besonders vorteilhaft bei Einsatz eines derartigen Getriebes als Fahrradgetriebe, da dadurch der Radfahrer beispielsweise "am Berg" unter Last von einer kleineren Übersetzung in eine größere Übersetzung schalten kann. Dies hat den Vorteil, daß keine Energieverluste infolge sonst erforderlicher Pausen während des Schaltvorganges bei herkömmlichen Getrieben auftreten.

Bei der Ausführung des Getriebes ohne Hilfsgetriebe ist unter Last eine Schaltung von dem langsameren in den schnelleren Gang möglich. Unter "langsameren Gang" wird eine größere Übersetzung und unter einem "schnelleren Gang" eine kleinere Übersetzung verstanden.

In weiterer Ausgestaltung der Erfindung kann vorgesehen sein, daß eine Laufbahn des Rollkörpers von einem Planetenkranz des Planetengetriebes gebildet wird und die andere Laufbahn von einem Exzenterrad gebildet wird.

In weiterer Ausgestaltung der Erfindung kann auch vorgesehen sein, daß die eine Laufbahn eines als Kugel ausgebildeten Rollkörpers von der Pendelscheibe eines Pendelgetriebes gebildet wird und dem Pendelgetriebe als Hilfsgetriebe ein Planetengetriebe nachgeschaltet ist und die andere Laufbahn einen jeweils mit gleicher Drehzahl umlaufenden und in der Drehzahl mit dem Planetenkranz des Planetengetriebes gekoppelten inneren und äußeren Laufbahnring aufweist, deren Abstand zueinander verstellbar ist, wobei die Senkrechten auf den Tangenten der Berührungspunkte der Laufbahnringe mit der Kugel sich im Kugelmittelpunkt schneiden. Der Einsatz einer Kugel als Rollkörper im vorliegenden Fall ermöglicht es, dieses Getriebe in seinem Übersetzungsverhältnis zu verstellen. Es ist natürlich auch möglich, bei Einsatz eines Pendelgetriebes einen nicht als Kugel ausgebildeten Rollkörper zu verwenden, vorzugsweise dann, wenn es sich um ein nicht verstellbares Getriebe handeln soll.

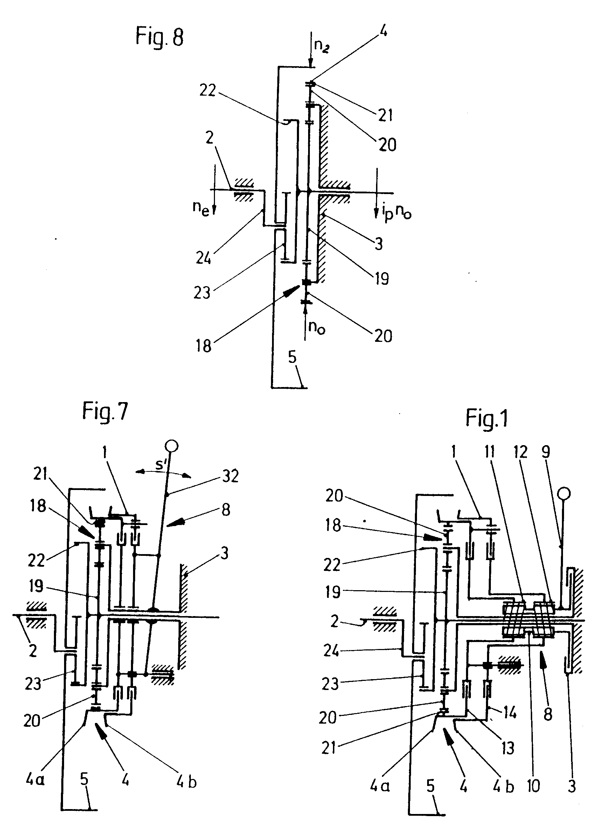

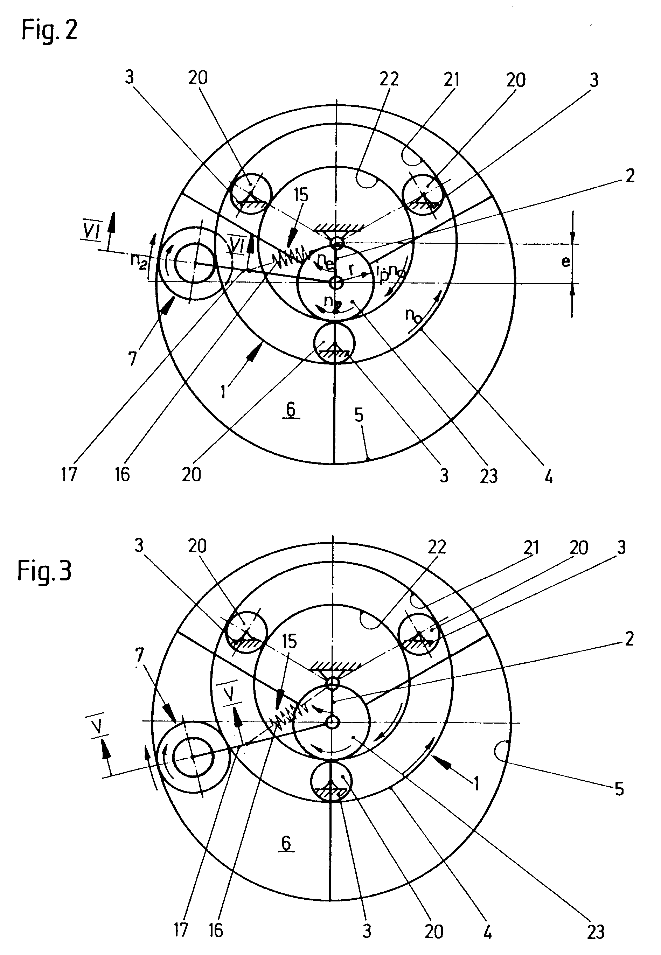

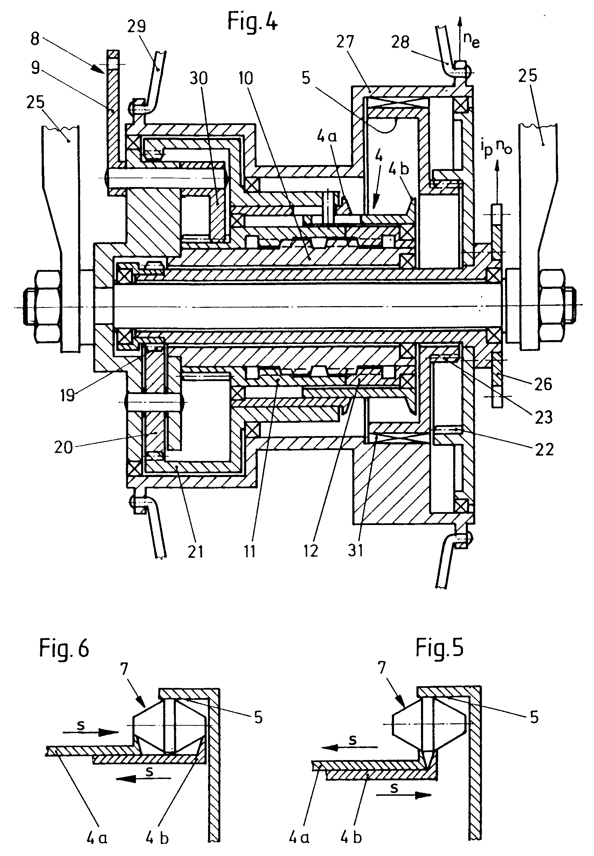

Die Erfindung wird nachfolgend anhand der in den Zeichnungen dargestellten Ausführungsbeispiele näher erläutert. Es zeigen:
Fig. 1
eine Prinzipzeichnung eines Ausführungsbeispiels des Getriebes in schematischer Längsschnittdarstellung;
Fig. 2
eine schematische Seitenansicht des Getriebes gemäß Fig. 1, wobei der Verstellmechanismus nicht dargestellt und der Rollkörper sichtbar ist;
Fig. 3
eine Darstellung entsprechend Fig. 2, wobei die innere Laufbahn gegenüber der Darstellung in Fig. 2 verstellt ist;
Fig. 4
ein Ausführungsbeispiel des Getriebes entsprechend Fig. 1 und 2 in Schnittdarstellung;
Fig. 5
eine Darstellung eines Rollkörpers mit einer Teilschnittdarstellung der Laufbahnen entsprechend der Schnittlinie V-V für das Ausführungsbeispiel gemäß Fig. 4;
Fig. 6
eine Fig. 5 entsprechende Darstellung entsprechend der Schnittlinie VI-VI in Fig. 2;
Fig. 7
eine Darstellung entsprechend der Darstellung in Fig. 1 für ein weiteres Ausführungsbeispiel der Erfindung mit einer anderen Verstellmechanik;
Fig. 8

eine Darstellung eines weiteren Ausführungsbeispiels der Erfindung ohne Verstellmöglichkeit;
Fig. 9
eine schematische Darstellung eines weiteren Ausführungsbeispiels der Erfindung, und zwar ohne Hilfsgetriebe;
Fig. 10
ein weiteres Ausführungsbeispiel der Erfindung, ebenfalls ohne Hilfsgetriebe;
Fig. 11
eine schematische Darstellung eines weiteren Ausführungsbeispiels der Erfindung, bei der eine Laufbahn des Rollkörpers als Pendelscheibe eines Pendelgetriebes ausgebildet ist und dem Pendelgetriebe als Hilfsgetriebe ein Planetengetriebe nachgeschaltet ist;
Fig. 12 und Fig. 13
schematische Schnittdarstellungen der Laufbahnen mit einer Darstellung des Rollkörpers entsprechend der Darstellung Fig. 5 bzw. Fig. 6.

Bei dem in Fig. 1 dargestellten Ausführungsbeispiel ist ein Eingangsdrehkörper mit 1, ein Ausgangsdrehkörper mit 2 und ein Gehäuse mit 3 bezeichnet. Die in Fig. 1 schraffierten Bereiche sind Teile des Gehäuses 3. Der Eingangsdrehkörper 1 weist eine insgesamt mit 4 bezeichnete innere Laufbahn für einen (in Fig. 1 nicht dargestellten) Rollkörper auf. Eine äußere Laufbahn ist mit 5 bezeichnet. Die Laufbahnen 4 und 5 sind im wesentlichen kreisrund ausgebildet. Wie ersichtlich, haben die Laufbahnen 4 und 5 keinen gemeinsamen Mittelpunkt, so daß sich zwischen den Laufbahnen 4 und 5 ein sich in Umfangsrichtung in seiner Größe verändernder Spalt 6 ergibt. Zwischen der Laufbahn 4 und der Laufbahn 5 ist ein die Drehbewegung übertragender Rollkörper 7 vorgesehen. Der Rollkörper 7 weist bei dem Ausführungsbeispiel gemäß Fig. 1 bis Fig. 6 die Form eines Doppelkegels auf.

Wie insbesondere aus den Figuren 2 und 3 sowie 5 und 6 ersichtlich, ist der Abstand zwischen den Kontaktstellen des Rollkörpers 7 mit der einen Laufbahn 4 und der anderen Laufbahn 5 verstellbar ausgebildet. Hierzu ist bei dem dargestellten Ausführungsbeispiel vorgesehen, daß die Laufbahn 4 jeweils zwei Laufbahnteile 4a und 4b aufweist, wobei die Laufbahnteile 4a und 4b in Pfeilrichtung S (Fig. 5 bzw. Fig. 6) gegeneinander verstellbar angeordnet sind. Die Verstellung erfolgt über eine insgesamt mit 8 bezeichnete Verstelleinrichtung, welche bei dem Ausführungsbeispiel gemäß Fig. 1 durch Betätigung eines Handhebels 9 verstellbar ist. Der Handhebel 9 kann um die Mittelachse verdrehbar angeordnet sein. Bei einer Verdrehung des Handhebels 9 wird eine Schraube 10 mit Linksgewindeteil und Rechtsgewindeteil verdreht. Dem Linksgewindeteil und dem Rechtsgewindeteil sind Muttern 11 und 12 zugeordnet, welche jeweils über eine in Achsrichtung starre Verbindung 13 und 14 mit den Laufbahnteilen 4a bzw. 4b in Achsrichtung starr verbunden sind. Dementsprechend wird bei einem Verdrehen des Handhebels 9 in einer Richtung der Abstand zwischen den Laufbahnteilen 4a und 4b vergrößert und bei einer Drehung in der gegenüberliegenden Richtung verkleinert.

Der Rollkörper 7 ist durch eine in den Figuren 2 und 3 schematisch dargestellte Zwangseinrichtung 15, welche eine Zugfeder 16 und einen Hebel 17 aufweist, mit den Laufbahnen 4 und 5 in dem sich verjüngenden Spalt in Kontakt gehalten. In Fig. 2 ist die Situation dargestellt, bei der die Laufbahnteile 4a und 4b den größten Abstand voneinander haben, wie in Fig. 6 dargestellt. In Fig. 3 ist die Situation entsprechend Fig. 5 dargestellt.

Da die Drehbewegung zwischen dem Eingangsdrehkörper 1 und dem Ausgangsdrehkörper 2 über die Laufbahnen 4 und 5 und den Rollkörper 7 übertragen wird, und außerdem durch Verstellung der Laufbahnteile 4a und 4b in axialer Richtung im Ergebnis der Abstand zwischen den Kontaktstellen des Rollkörpers 7 mit der Laufbahn 4 und der Laufbahn 5 über die Verstelleinrichtung 8 verstellbar ausgebildet ist, ist dadurch das Übersetzungsverhältnis des Getriebes verstellbar. Wie ein Vergleich zwischen Fig. 5 und Fig. 6 zeigt, bleibt der Rollradius des Rollkörpers 7 hinsichtlich der Laufbahn 5 unverändert, während der Rollradius des Rollkörpers 7 mit der aus den Teilen 4a und 4b bestehenden Laufbahn zwischen den in Fig. 5 dargestellten größten und dem in Fig. 6 dargestellten kleinsten Rollradius stufenlos verstellbar ist.

Bei dem bisher beschriebenen Ausführungsbeispiel ist weiterhin ein als Planetengetriebe ausgebildetes Hilfsgetriebe vorgesehen. Das Planetengetriebe ist schematisch mit 18 bezeichnet und weist ein Sonnenrad 19, stationäre Planetenräder 20 und einen Planetenkranz 21 auf, der an seinem Außenumfang gleichzeitig die Laufbahn 4 bildet. Drehfest verbunden mit dem Sonnenrad 19 ist ein zweiter Planetenkranz 22, in welchem ein Planetenrad 23 angeordnet ist, welches drehfest mit der äußeren Laufbahn 5 verbunden ist. Der Mittelpunkt des Planetenrades 23 ist über eine Kurbel 24 mit dem den Abtrieb bildenden Ausgangsdrehkörper 2 verbunden.

In Fig. 4 ist eine Ausführungsform des vorbeschriebenen Getriebes als Fahrradgetriebe dargestellt, wobei jeweils bereits beschriebene gleiche Teile mit gleichen Bezugszeichen versehen sind.

Die Gabel eines Fahrrades ist mit 25 bezeichnet. Ein mit 26 bezeichnetes Kettenrad bildet den Eingangsdrehkörper. Ein mit 27 bezeichnetes Gehäuse, an welchem bei 28 und 29 Speichen befestigbar sind, bildet den Ausgangsdrehkörper.

Die Verstellung des Verstellmechanismus 8 kann über einen Hebel 9, der mit einem verzahnten Kreissegment 30 in Verbindung steht, welches die Muttern 11 bzw. 12 des Links-Rechtsgewindes verdrehen kann, verstellt werden.

Anstelle der Kurbel 24 gemäß Fig. 1 ist bei dem Ausführungsbeispiel gemäß Fig. 4 ein exzentrisch zu der Mittelachse in dem Gehäuse gelagertes Kugellager 31 vorgesehen. Die Exzentrizität der Lagerung des Kugellagers 31 entspricht der Exzentrizität e (Fig. 2) der Lagerung des Planetenrades 23.

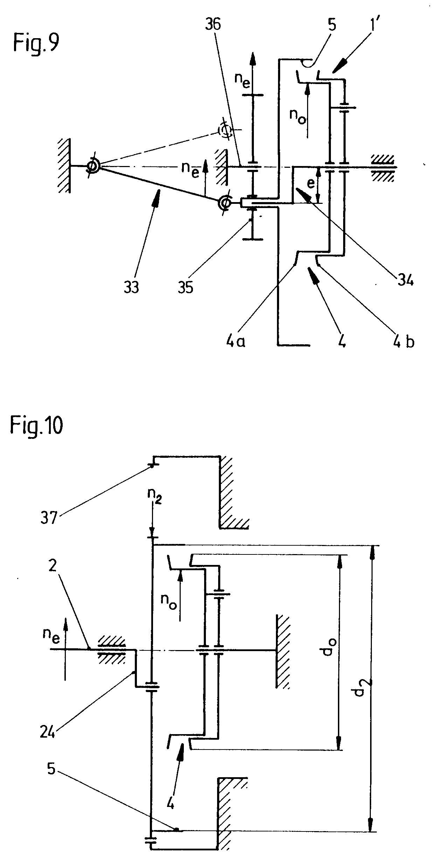

Das in Fig. 7 dargestellte Getriebe unterscheidet sich prinzipiell von dem in Fig. 1 dargestellten Getriebe lediglich durch eine andere Ausbildung des Verstellmechanismus 8. Hier ist ein in Achsrichtung entsprechend dem Doppelpfeil des S' verschwenkbarer Verstellhebel 32 vorgesehen, mit welchem - wie ersichtlich - im Ergebnis auch der axiale Abstand der Laufbahnteile 4a und 4b verstellbar ist.

Die prinzipielle Fnktion des Getriebes wird nachfolgend anhand von Fig. 8 erläutert, in welcher der Verstellmechanismus nicht gezeichnet ist.

Die mit $i_{pn0}$ bezeichnete Eingangsdrehzahl wird durch den Planetenkranz 22 auf das Planetenrad 23 übertragen, welches mit der Laufbahn 5 starr verbunden ist. Über den (in Fig. 8 nicht dargestellten) und zwischen der Laufbahn 5 und die auf dem Planetenkranz 21 gebildete Laufbahn 4 angeordnete und zwangsweise in dem sich verjüngenden Spalt gehaltenen Rollkörper 7 wird die Drehbewegung und auch die Antriebskraft auf den Planetenkranz 21 übertragen. Von da aus werden die Planetenräder 20 angetrieben, welche über das Sonnenrad 19 wiederum mit der Eingangsdrehwelle in Verbindung stehen.

Der Ausgangsdrehkörper 2 steht über die Kurbel 24 drehbar mit dem Planetenrad 23 in Verbindung. Das Planetenrad 23 dreht sich um seine eigene Achse und läuft außerdem mit der Drehzahl der Kurbel 24 in dem Planetenkranz 22 um, und zwar mit der mit $n_e$ bezeichneten Ausgangsdrehzahl. Die Ausgangsdrehzahl $n_e$ ist veränderbar, und zwar abhängig von dem Rollradius des Rollkörpers 7 auf der Laufbahn 4, und zwar dadurch, daß die Laufbahnteile 4a und 4b verstellbar sind, wie aus Fig. 5 und Fig. 6 ersichtlich. Infolge der beschriebenen Rückkopplung mit dem Sonnenrad 19 und damit mit dem Eingangsdrehkörper wird ein Zwangslauf erreicht, d.h., daß die Vorrichtung nicht wie ein Freilauf wirkt. Das Übersetzungsverhältnis hängt dann ausschließlich von dem Abstand zwischen den Kontaktstellen des Rollkörpers 7 mit den Laufbahnen 4 und 5 ab.

Fig. 9 zeigt eine schematische Darstellung eines weiteren Ausführungsbeispiels der Erfindung ohne Hilfsgetriebe und ohne Darstellung der Verstelleinrichtung. Bei der Anordnung gemäß Fig. 9 ist der hier mit 1' bezeichnete Eingangsdrehkörper gleichzeitig dasjenige Teil, welches die Laufbahnen 4a und 4b aufweist. Die zum Antrieb erforderlichen Mittel sind zeichnerisch nicht dargestellt. Die Verstelleinrichtung zur axialen Verstellung der Laufbahnteile 4a und 4b kann beispielsweise entsprechend Fig. 1 oder Fig. 7 ausgebildet sein. Einzelheiten hiervon sind nicht dargestellt.

Weiterhin ist der zwischen den Laufbahnen 4a, 4b einerseits und 5 andererseits vorhandene Rollkörper 7 nicht dargestellt. Die Bewegung wird über den (nicht dargestellten) Rollkörper auf die Laufbahn 5 übertragen. Die Laufbahn 5 ist drehfest angeordnet, und zwar ist die Laufbahn 5 über ein feststehendes Kardangelenk 33 an einer Drehung gehindert. Dies hat zur Folge, daß bei gemeinsamer Drehung der Laufbahnteile 4a und 4b der Rollkörper zwischen dieser Laufbahn und der feststehenden Laufbahn 5 abrollt. Die Laufbahn 4 und die Laufbahn 5 haben keinen gemeinsamen Mittelpunkt, sondern der Mittelpunkt der Laufbahn 4 ist über eine Kurbel 34 mit einer Exzentrizität e gegenüber dem Mittelpunkt der Laufbahn 5 versetzt.

Ein Abtriebsrad 35 ist um eine ortsfest angebrachte Achse 36 verdrehbar angeordnet. Außerhalb des Mittelpunktes des Abtriebsrades 35 greift in dieses die mit der Laufbahn 5 in Verbindung stehende Kurbel 34 ein. Die Abtriebsdrehzahl $n_e$ kann am Außenumfang des Abtriebsrades 35 abgenommen werden. Das Abtriebsrad 35 wird durch die Kurbel 34 um die Achse 36 gedreht, wobei die Laufbahn 5 durch das Kardangelenk 33 gegen das ortsfeste Gehäuse abgestützt wird. In Fig. 9 ist die Lage, die das Kardangelenk 33 bei einer Drehung des Abtriebsrades 35 um 180° einnimmt, gestrichelt dargestellt.

Nachfolgend wird anhand von Fig. 10 ein allgemeines der Erfindung zugrundeliegendes Prinzip erläutert. Die Darstellung entsprechend Fig. 10 entspricht prinzipiell der Darstellung gemäß Fig. 8, jedoch ohne das dort dargestellte Planetengetriebe. Im Unterschied zu Fig. 8 ist hier außerhalb der Laufbahn 5 ein Planetenkranz 37 vorgesehen, welcher drehfest angebracht ist. In diesem Planetenkranz 37 ist die Laufbahn 5 exzentrisch umlaufend angeordnet. Auch hier ist der Rollkörper nicht dargestellt. Die Eingangsdrehung wird der Laufbahn 4 aufgegeben. Die Eingangsdrehzahl ist mit $n_0$ bezeichnet. Die Ausgangsdrehzahl ist $n_e$ bezeichnet.

Der Rolldurchmesser der Laufbahn 4 ist mit $d_0$ bezeichnet, und der Rolldurchmesser der Laufbahn 5 ist mit $d_2$ bezeichnet. Die Drehzahl der Laufbahn 5 ist mit $n_2$ bezeichnet. Wie durch die Pfeile bei $n_2$ und $n_e$ angedeutet, sind die Drehrichtungen der Laufbahn 5 und des Ausgangsdrehkörpers 2 entgegengesetzt.

Es sind auch weitere Ausführungsformen des erfindungsgemäßen Getriebes möglich, und zwar dann, wenn diese der nachfolgenden Bedingung entsprechen:

$$n_2 \cdot d_2 \neq n_0 \cdot d_0 .$$

Wenn nämlich beide Werte gleich wären, hätte dies zur Folge, daß die Abtriebsdrehzahl $n_e$ den Wert O hat, da in diesem Fall der Rollkörper zwar gedreht wird, aber der Rollkörper ortsfest bleibt und sich nicht mehr nach Art eines Planetenrades um den Antrieb in dem sich verjüngenden Spalt mit der "über den Umfang wandernden" Verjüngung bewegt.

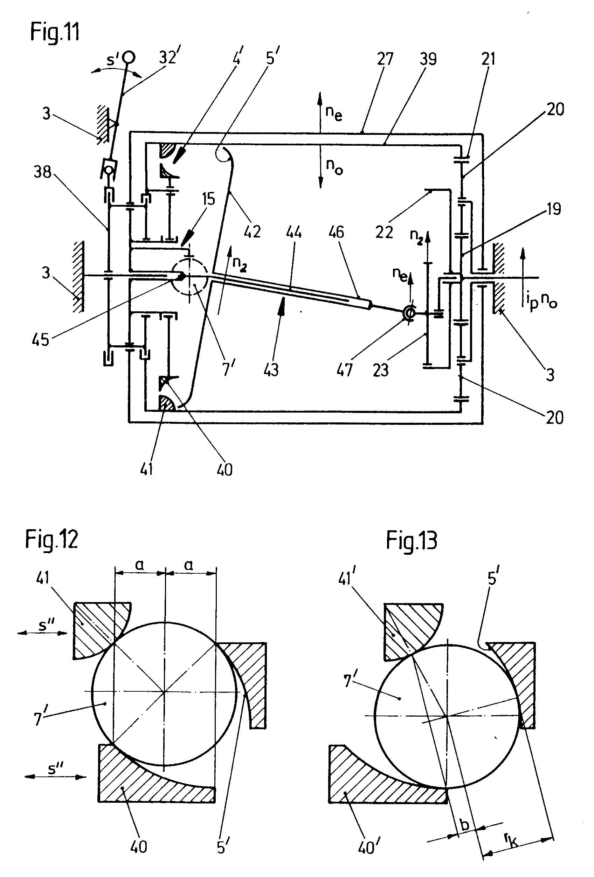

Bei dem in Fig. 11 dargestellten weiteren Ausführungsbeispiel sind diejenigen Teile, die bereits anhand weiterer Figuren beschrieben sind, mit dem jeweils gleichen Bezugszeichen bezeichnet. Funktionsgleiche Bauteile sind mit dem Zusatz "'" versehen, so beispielsweise der Verstellhebel 32'. Bei Betätigung des Verstellhebels 32' in Richtung des Doppelpfeiles s' wird über ein von der Verstelleinrichtung entkoppeltes Rad 38 ein hülsenförmiges Teil 39 in Achsrichtung verschoben. Das hülsenförmige Teil 39 weist einen äußeren Laufbahnring 41 auf. Ein innerer Laufbahnring 40 ist bei dem dargestellten Ausführungsbeispiel in Achsrichtung nicht verstellbar, während der äußere Laufbahnring 41 durch Betätigung des Verstellhebels 32' in Richtung s' verstellbar ist. Es ist auch grundsätzlich möglich, den inneren und den äußeren Laufbahnring jeweils verstellbar anzuordnen. Die Laufbahnringe 40 und 41 sind zwischen der in Fig. 12 und der in Fig. 13 dargestellten Stellung in Richtung s'' relativ zueinander verschiebbar. In Fig. 13 sind die Laufbahnringe mit 40' bzw. 41' bezeichnet.

Die Laufbahnringe 40 und 41 bilden die hier mit 4' bezeichnete eine Laufbahn. Die hier mit 5' bezeichnete andere Laufbahn wird von der Pendelscheibe 42 eines insgesamt mit 43 bezeichneten Pendelgetriebes gebildet. Die Pendelscheibe 42 ist auf einer abgewinkelten Achse 44 angeordnet, welche bei 45 starr mit dem Gehäuse 27 verbunden ist. Das Lagerrohr 46 der Pendelscheibe 42 ist über ein Kardangelenk 47 mit dem Planetenrad 23 drehsteif verbunden, so daß sich im Ergebnis die Pendelscheibe 42 mit der gleichen Drehzahl dreht wie das Planetenrad 23.

Der zwischen den Laufbahnen 4 und 5 befindliche Rollkörper ist im vorliegenden Falle als Kugel 7' ausgebildet. Die Kugel 7' befindet sich um 90° zur Blattebene versetzt an der Laufbahn 5'.

Vom Prinzip her unterscheidet sich die in Fig. 11 dargestellte Ausführungsform dadurch, daß eine der Laufbahnen bei dieser Ausführungsform von der Pendelscheibe 42 des Pendelgetriebes gebildet wird. Bei den vorher beschriebenen Ausführungsformen hängt die Belastung des Rollkörpers u.a. von der Exzentrizität e ab. Demgegenüber hängt bei der Ausführungsform mit Pendelscheibe die Belastung des Rollkörpers (hier Kugel) von dem Radius der Pendelscheibe ab. Je größer der Radius der Pendelscheibe ist, umso geringer wird die Belastung des Rollkörpers. Dies hat den Vorteil, daß prinzipiell mit der Ausführungsform mit Pendelscheibe bei gleicher Außengeometrie größere Kräfte übertragen werden können. Die Flächenpressung des Rollkörpers darf nämlich bestimmte Werte nicht überschreiten, da dies zur Zerstörung des Rollkörpers und/oder der Laufbahnen führen könnte.

**Patentansprüche**

1. Getriebe mit einem Eingangsdrehkörper, einem Ausgangsdrehkörper und einem Gehäuse, dadurch gekennzeichnet, daß in dem Getriebe wenigstens ein die Drehbewegung zwischen dem Eingangsdrehkörper (1) und dem Ausgangsdrehkörper (2) übertragender Rollkörper (7, 7') vorgesehen ist, der zwischen wenigstens zwei im wesentlichen kreisrunden und einen sich in Umfangsrichtung verjüngenden Spalt (6) bildenden Laufbahnen (4, 5 bzw. 4', 5') abrollbar angeordnet ist und der Rollkörper (7, 7') mit einem Antriebsabrollradius mit der einen Laufbahn und mit einem Abtriebsabrollradius mit der anderen Laufbahn in dem sich verjüngenden Spalt durch eine Zwangseinrichtung (15) in Kontakt gehalten ist.

2. Getriebe nach Anspruch 1, dadurch gekennzeichnet, daß der Abstand zwischen den Kontaktstellen des Rollkörpers (7, 7') mit der einen Laufbahn (4, 4') und der anderen Laufbahn (5, 5') über eine Verstelleinrichtung (8) verstellbar ausgebildet ist.

3. Getriebe nach Anspruch 2, dadurch gekennzeichnet, daß die Verstelleinrichtung (8) stufenlos verstellbar ausgebildet ist.

4. Getriebe nach einem der Ansprüche 1 bis 3, dadurch gekennzeichnet, daß wenigstens einer der Laufbahnen ein Hilfsgetriebe vor- bzw. nachgeschaltet ist.

5. Getriebe nach Anspruch 4, dadurch gekennzeichnet, daß das Hilfsgetriebe ein Planetengetriebe (18) ist.

6. Getriebe nach Anspruch 5, dadurch gekennzeichnet, daß dem Pendelgetriebe ein Planetengetriebe nachgeschaltet ist.

7. Getriebe nach Anspruch 4, dadurch gekennzeichnet, daß das Hilfsgetriebe ein Stirnradgetriebe ist.

8. Getriebe nach einem der Ansprüche 1 bis 7, dadurch gekennzeichnet, daß die Zwangseinrichtung als mechanische Andrückeinrichtung ausgebildet ist.

9. Getriebe nach einem der Ansprüche 1 bis 7, dadurch gekennzeichnet, daß die Zwangseinrichtung als pneumatische Andrückeinrichtung ausgebildet ist.

10. Getriebe nach einem der Ansprüche 1 bis 7, dadurch gekennzeichnet, daß die Zwangseinrichtung als hydraulische Andrückeinrichtung ausgebildet ist.

11. Getriebe nach einem der Ansprüche 1 bis 7, dadurch gekennzeichnet, daß die Zwangseinrichtung als elektrische Andrückeinrichtung ausgebildet ist.

12. Getriebe nach einem der Ansprüche 1 bis 7, dadurch gekennzeichnet, daß die Zwangseinrichtung als magnetische Andrückeinrichtung ausgebildet ist.

13. Getriebe nach Anspruch 1, dadurch gekennzeichnet, daß eine der Laufbahnen (5') von der Pendelscheibe (42) eines Pendelgetriebes (43) gebildet ist.

14. Getriebe nach Anspruch 13, dadurch gekennzeichnet, daß dem Pendelgetriebe (43) als Hilfsgetriebe ein Planetengetriebe nachgeschaltet ist, und die andere Laufbahn (4') einen jeweils mit gleicher Drehzahl umlaufenden und in der Drehzahl mit dem Planetenkranz (21) des Planetengetriebes gekoppelten inneren und äußeren Laufbahnring (40, 41) aufweist, deren Abstand zueinander verstellbar ist, wobei die Senkrechten auf den Tangenten der Berührungspunkte der Laufbahnringe (40, 41) mit dem als Kugel (7') ausgebildeten Rollkörper sich im Kugelmittelpunkt schneiden.

Fig. 8

$n_2$

4

22

21

20

2

$n_e$

$i_p n_o$

24

3

23

19

18

$n_o$

20

5

Fig. 7

21

18

22

19

1

$s'$

32

8

3

2

23

20

4a    5    4    4b

Fig. 1

20

18

22

19

2

24

23

20

21

1    11    12    9

14

13

4a    5    4    4b    10    3

8

**Fig. 2**

**Fig. 3**

## Fig.4

## Fig. 6

## Fig.5

Fig.9

Fig.10

Fig.11

Fig.12

Fig.13